Europäisches Patentamt

European Patent Office

Office européen des brevets

(11) Veröffentlichungsnummer : **0 083 778**
**B1**

# EUROPÄISCHE PATENTSCHRIFT

(45) Veröffentlichungstag der Patentschrift :
11.11.87

(51) Int. Cl.⁴ : **A 61 J   1/00**

(21) Anmeldenummer : **82111877.5**

(22) Anmeldetag : **21.12.82**

(54) **Aufbewahrungsbeutel.**

(30) Priorität : **07.01.82 DE 3200263**

(43) Veröffentlichungstag der Anmeldung :
**20.07.83 Patentblatt 83/29**

(45) Bekanntmachung des Hinweises auf die Patenterteilung : **11.11.87 Patentblatt 87/46**

(84) Benannte Vertragsstaaten :
**AT BE CH DE FR GB IT LI LU NL SE**

(56) Entgegenhaltungen :
**FR-A- 2 376 666**
**FR-A- 2 431 289**
**US-A- 4 301 800**

(73) Patentinhaber : **Fresenius AG**
**Gluckensteinweg 5**
**D-6380 Bad Homburg (DE)**

(72) Erfinder : **Herbert, Reinhold**
**Breite Strasse 7**
**D-6392 Neu-Anspach (DE)**

(74) Vertreter : **Luderschmidt, Wolfgang, Dr. Dipl-Chem.**
**Görtz, Dr. Fuchs, Dr. Luderschmidt Patentanwälte**
**Sonnenberger Strasse 100 Postfach 26 26**
**D-6200 Wiesbaden (DE)**

## Beschreibung

Die Erfindung betrifft einen Aufbewahrungsbeutel, insbesondere für medizinische Zwecke zur Lagerung von Blut oder Infusionslösungen, aus Polyolefin und mit wenigstens einer schlauchförmigen Auslauföffnung.

Beutel der eingangs erwähnten Art werden millionenfach in der Medizin eingesetzt. Sie dienen beispielsweise zur Aufnahme von Blut als Blutbeutel oder zur sterilen Lagerung von parenteral zu verabreichenden Infusionslösungen. Zu diesem Zweck müssen sie vollkommen steril sein, was üblicherweise durch eine Erhitzung auf wenigstens 100 °C, insbesondere etwa 120 °C erzielt wird. Hieraus ergibt sich bereits die Anforderung an das thermoplastische polymere Material, wenigstens bis zur Erhitzungstemperatur stabil zu sein.

Darüber hinaus muß ein derartiger Beutel leicht, billig und in einem automatischen Herstellungsprozeß herzustellen sein und wegen seines geringen Werts nach dem Gebrauch wegwerfbar sein. Weiterhin soll er biegbar, zusammenfaltbar und im verarbeiteten Zustand derart transparent sein, daß Veränderungen der im Beutel enthaltenen Flüssigkeit sofort bemerkt werden können.

Als einziges Polymerisat, das diese Voraussetzungen bisher erfüllt, ist Weich-Polyvinylchlorid (Weich-PVC) zum Einsatz gekommen, das also zur Verbesserung der elastischen Eigenschaften weichmachende Stoffe enthält. Diese weichmachenden Stoffe, beispielsweise Diisooktylphthalat, geben jedoch Anlaß zu bedenklichen Erscheinungen. So werden diese Stoffe nicht vollständig in den Hohlräumen zwischen den polymeren Ketten eingeschlossen und können daher durch das in den Beutel eingefüllte Wasser bzw. die wässrige Lösung aus dem Polymerisat herausgelöst werden, so daß es zu einer Verunreinigung der im Beutel enthaltenen Flüssigkeit kommt.

Abschätzungen haben ergeben, daß ein über längere Zeit unter Verwendung derartiger PVC-Beutel behandelter Patient einige Gramm Weichmacher in sich aufgenommen hat, was an sich physiologisch höchst bedenklich ist und zu dauerhaften Schäden des Patienten führen kann.

Darüber hinaus wird ein Beutel aus Weich-PVC leicht von Mikroorganismen befallen, die insbesondere die Weichmacher herauslösen und damit regelmäßig den Beutel zerstören. Insofern mußte ein derartiger PVC-Beutel nach dem Füllen mit einer speziellen Umverpackung vor schädigenden Mikroorganismen geschützt werden.

Dieser Sachverhalt führte dazu, daß derartige PVC-Beutel die üblicherweise eingesetzten Glasflaschen als Aufbewahrungsbehälter für medizinische Lösungen nicht im wesentlichen Umfang verdrängen konnten und teilweise sogar in einigen Industrieländern überhaupt nicht zum Einsatz auf dem medizinischen Gebiet zugelassen wurden.

Es wurden daher Versuche unternommen, das Weich-PVC durch andere Stoffe zu ersetzen. Diese Versuche scheiterten jedoch, da sie entweder zu teuer waren oder aber mechanische und physiologische Schwierigkeiten aufwiesen, beispielsweise eine zu hohe Wasserdampfdurchlässigkeit, was zur unerwünschten Erhöhung der Konzentration der in der Lösung enthaltenen Stoffe führte. Darüber hinaus setzten sie auslaugbare Bestandteile frei oder waren bei zu hoher mechanischer Beanspruchung leicht zu beschädigen.

In der CH-A-444 382 ist ein derartiger Kunststoffbeutel beschrieben, der für parenteral zu verwendende therapeutische Flüssigkeiten eingesetzt werden kann. Bei diesem Kunststoffbeutel besteht die Wandung aus einem Kunststofflaminat, das auf der Außenseite, also der flüssigkeitsabgewandten Seite, eine PVC-Schicht und auf der Innenseite eine Polyhalogen-Kohlenwasserstoff-Kunstharzschicht aufweist. Diese letztere Schicht weist keine pharmakologisch unzulässigen Bestandteile auf, die durch Auflösen in die in dem Beutel enthaltene Lösung übergehen könnten. Die zum Einsatz kommenden Polyhalogen-Kohlenwasserstoffe haben jedoch den Nachteil, daß sie sehr kostspielig zu produzieren und zu verarbeiten sind und nicht ausreichend an den Abschweißnähten verschmelzen, so daß noch ein direkter Kontakt mit dem PVC besteht. Dieser Kontakt besteht im übrigen auch an der Auslaßöffnung, die üblicherweise vollständig aus PVC ausgeführt ist und die mit weiteren PVC-Verbindungsschläuchen verbunden werden kann. Weiterhin stellt ein derartiger Wegwerfbeutel eine Belastung für die Umwelt dar, da die Verbrennung dieser Beutel zu hochaggressiven Halogenwasserstoffen führt.

Ein weiterer Beutel ist in der US-A-41 40 162 beschrieben, der aus einer Kunststoffmasse mit drei Komponenten besteht. Diese Komponenten sind ein Polyolefin, das im wesentlichen aus Propyleneinheiten besteht, ein Blockcopolymer und gegebenenfalls ein Weichmacher, der ebenfalls ein Polymer sein kann. Weiterhin kann dieser Beutel Antioxidantien aufweisen, die sicherlich nicht hygienisch unbedenklich sind.

Aus der vorstehenden Aufführung der Komponenten ist bereits ersichtlich, daß sowohl die Komponenten selbst als auch die Verarbeitung dieser Komponenten kostspielig sind und ein daraus hergestellter Beutel sich gegenüber den üblichen PVC-Beuteln sowohl aus Herstellungsals auch aus Kostengründen nicht durchsetzen dürfte.

Dies hat dazu geführt, daß die gleiche Anmelderin eine weitere Kunststoffmasse zur Herstellung von Verbindungselementen zwischen PVC-Schläuchen einerseits und Polyolefinbeuteln andererseits in der DE-A-30 26 974 angemeldet hat. Diese Kunststoffmasse besteht wiederum aus mehreren polymeren Komponenten, für deren Herstellung und Preis das vorstehend Gesagte gilt. Weiterhin muß dieses Verbindungsglied sowohl mit dem Polyolefinbeutel als auch mit dem PVC-Schlauch verschweißt werden, was üblicherweise prozeßtechnische Schwierigkeiten macht und überdies kostenverursachend ist.

Festzuhalten ist insbesondere, daß sämtliche vorgeschlagene Lösungen mit PVC-Verbindungsschläuchen arbeiten, die natürlich Weichmacherstoffe aufweisen und insofern als bedenklich anzusehen sind.

Diese Verbindungsschläuche, die üblicherweise als Auslauftülle mit den PVC-Beuteln verschweißt sind, weisen die gewünschten hochelastischen Eigenschaften auf, die zur Halterung von Einsteckverschlüssen notwendig sind. So darf die im Beutel enthaltene Flüssigkeit beim Sterilisieren durch Erhitzen auf etwa 120 °C nicht zwischen der Auslauftülle und dem Verschlußstück herausfließen. Darüber hinaus muß das Verschlußstück vom Schlauchstück derart fest umgeben sein, daß es allenfalls mit großer Kraftanwendung herausgezogen werden kann.

Weiter ist zu berücksichtigen, daß es in der Nahrungsmittelindustrie seit langem in Kunststoffbeuteln verpackte Nahrungsmittel gibt, bei denen der Kunststoffbeutel ggf. eine zugeschweißte Auslauftülle aus dem gleichen Material aufweist. Solche Ausgangsöffnungen weisen jedoch nicht die vorstehend erwähnten hochelastischen Eigenschaften auf und können nur dann sterilisiert werden, wenn der Beutel selbst sterilisierbar ist.

Demzufolge liegt der Erfindung die Aufgabe zugrunde, einen Beutel der eingangs erwähnten Art zu schaffen, der bei Temperaturen von wenigstens 100 °C hitzesterilisierbar ist und wenigstens eine hochelastische Auslauftülle aufweist.

Weiterhin liegt der Erfindung die Aufgabe zugrunde, einen Beutel der eingangs erwähnten Art aus einem allgemein gebräuchlichen, kostengünstigen Kunststoffmaterial zu schaffen, der nach seiner Herstellung bereits im sterilen Zustand vorliegt und direkt mit einer sterilen Flüssigkeit gefüllt werden kann.

Erfindungsgemäß wird diese Aufgabe durch einen Beutel aus einem Polyolefin gelöst, der wenigstens eine Auslauftülle aus einem kreuzvernetzten Kopolymerisat von Olefin und Vinylacetat aufweist.

Erfindungsgemäß wird nunmehr ein Beutel erhalten, der unter Einsatz von sehr kostengünstigen Kunststoffmaterialien, wie beispielsweise Polyethylen, hergestellt werden kann. Hierzu können die üblichen Extrudierverfahren zur Herstellung von Folien oder Schlauchfolien zur Anwendung kommen, die den Fachmann vor keine nennenswerten Probleme stellen.

Auch der Schlauch, der zur Erzeugung der schlauchförmigen Auslaßöffnung eingesetzt wird, geht von sehr kostengünstigen Olefin-Ausgangsmaterialien aus, die mit einem bestimmten Anteil Vinylacetat (VAC) kopolymerisiert sind.

Dieses Kopolymerisat läßt mit steigendem VAC-Gehalt die Rückprall-Elastizität sprunghaft ansteigen, die ein Maß für die Elastizität des Schlauchs ist. Polyolefinschläuche allein haben gegenüber diesem Kopolymerisat den Nachteil, daß sie nicht ausreichend elastisch sind und nicht mit Anschlußelementen, wie Kupplungen und dgl., dicht anliegend versehen werden können, was für den Medizinbereich eine zwingende Voraussetzung ist. Daher ist bis heute der Einsatz von PVC-Schläuchen, die diese sehr guten Elastizitäts-Eigenschaften aufweisen, — wie vorstehend erläutert — eine zwingende Voraussetzung.

Setzt man beispielsweise ein Kopolymerisat aus Ethylen und Vinylacetat (EVA) ein, so stellt man fest, daß zwar mit steigendem VAC-Gehalt die Rückprall-Elastizität wächst, andererseits aber die Schmelztemperatur im interessierenden VAC-Bereich auf Werte unter 100 °C abfällt, so daß eine Sterilisation eines Beutels mit einem derartigen Schlauchanschlußstück nicht mehr möglich ist.

Nun ist zwar bekannt (siehe z. B. FR-A-2 376 666), daß Schläuche auf der Basis von VAChaltigen Polyolefinen durch Kreuzvernetzung thermisch stabilisiert werden können und sogar noch in ihrem Elastizitäts-Verhalten verbessert werden können, andererseits jedoch aber auch dem Fachmann geläufig ist, daß diese kreuzvernetzten Schläuche nicht mehr mit dem als Beutelmaterial eingesetzten Ausgangspolyolefin allein verschweißt werden können, daß also keine Verbindung zwischen dem Polyolefin und dem kreuzvernetzten Kopolymerisat aus Olefin und VAC zustande kommt.

Erfindungsgemäß wurde nunmehr überraschenderweise festgestellt, daß sich ein Polyolefin-Beutel und ein noch nicht kreuzvernetzter Schlauch aus einem Kopolymerisat aus Olefin, insbesondere Ethylen, und VAC miteinander verschweißen lassen. Nach der Kreuzvernetzung des Kopolymerisats wird diese Verbindung nicht mehr aufgehoben. Weiterhin bleiben die mechanischen Eigenschaften der Ausgangsprodukte auch an diesem Endprodukt erhalten.

Besonders hervorzuheben ist bei einem derart kreuzvernetzten Schlauchstück, das als Auslauftülle in einen Polyethylenbeutel eingeschweißt ist, das günstige Elastizitäts- und Temperaturverhalten, das dazu führt, daß der erfindungsgemäße Beutel sehr gut bei hohen Temperaturen, beispielsweise etwa 120 °C, sterilisiert werden kann und andererseits ausgezeichnete Halteeigenschaften an dem Schlauchansatzstück besitzt, so daß daran befestigte Kupplungsstücke nicht mehr abgezogen werden können. Ein derartiger sterilisierbarer Beutel für medizinische Zwecke ist also, soweit dies seine mechanischen Eigenschaften betrifft, den Eingenschaften eines herkömmlichen PVC-Beutels zumindest gleichwertig.

Darüber hinaus ist er weichmacherfrei, da die üblicherweise als Beutelmaterial eingesetzten Polyolefinmaterialien in Folienform keine Weichmacherzusätze aufweisen, so daß zudem ein Befall durch Mikroorganismen wirksam verhindert wird. Demzufolge ist der erfindungsgemäße Beutel in jeder Hinsicht als hygienischer anzusehen gegenüber dem heute vielfach eingesetzten PVC-Beutel.

Zu einsetzbaren Polyolefinen, die als Polymer zur Herstellung des erfindungsgemäßen Beutels eingesetzt werden können, gehören Polymerisate aus Olefinen, wie Ethylen, Propylen, Butylen u. dgl. Bevorzugt ist als Ausgangsolefin Ethylen, das ggf. mit einer oder mehreren Gruppen substituiert ist.

Als Substituenten kommen beispielsweise die Methyl- oder Ethylgruppe, die Vinylgruppe und Halogenatome, insbesondere Fluoratome, in Frage.

Besonders bevorzugt ist Ethylen, das zu Polyethylen polymerisiert ist.

Spezielle Beispiele für Polyolefine sind Polyethylen, Polypropylen, Poly-n-butylen, Polyisobutylen, Poly-4-methylpenten-1, chlorsulfoniertes Polyethylen, Polystyrol, halogenierte Polyethylene, wie Polyvinylfluorid, Polyvinylidenfluorid und Polyvinylidenchlorid, Polymethylmetacrylat u. dgl. Die zur Herstellung vorstehender Polyolefine eingesetzten Olefine können auch als Kopolymerisate und Mischpolymerisate mit anderen Vinylverbindungen eingesetzt werden, beispielsweise Ethylen/Propylen-Kunststoffe, Poly-(Ethylen/Vinylacetat), Acrylnitril/Butadien/Styrol-Polymerisate, Ethylen-Propylen-Block-Kopolymerisat, Styrol-Kopolymerisate, Vinylidenfluorid enthaltende Kopolymerisate sowie Styrol enthaltende Kopolymerisate.

Polyolefine sind erfindungsgemäß Produkte, die durch die Vinylpolymerisation von gegebenenfalls substituierten Ethylen hergestellt werden. Diese Produkte können auch geringe Zusätze von weiteren Polymerisaten aufweisen, die im wesentlichen nicht die Struktur dieser Polyolefine stören oder verändern. So können beispielsweise geringe Zusätze von Styrol oder Polyacrylnitril substituierten Ethylenverbindungen zugesetzt werden. Die dadurch entstehenden Polyolefin-Produkte werden als zu den vorstehend genannten Polyolefinen zugehörig angesehen.

Erfindungsgemäß wird vorzugsweise als Polyolefin Polyethylen als Material für den Beutel eingesetzt, das ggf. geringe Zusätze an Vinylacetat in Form des Kopolymers von Ethylen und Vinylacetat aufweisen kann. In einen solchen Fall kann beispielsweise der Vinylacetat bis zu 10 Gew.-% betragen.

Insbesondere wird ein Polyethylen mit mittlerer bis hoher Dichte (MDA und HDA) eingesetzt, das üblicherweise durch Niederdruckpolymerisation hergestellt wird. Dabei liegt die Dichte in einem Bereich von 0,91 bis 0,94, insbesondere etwa bei 0,935 g/cm³.

Weiterhin weist das erfindungsgemäß bevorzugt eingesetzte Polyethylen ein hohes Molekulargewicht und eine enge Molekulargewichtsverteilung auf.

In jedem Fall ist jedoch darauf zu achten, daß derartige Polyolefine keinen Schmelzpunkt besitzen, der unterhalb der Sterilisationstempeatur von 110-120 °C liegt. Vorzugsweise soll der Schmelzbereich oberhalb 116 °C, insbesondere bei 120-124 °C liegen, während die Vicat-Erweichungstemperatur nach DIN 53460 oberhalb 115 °C liegen soll.

Im Falle der vorstehend genannten EVA-Polymerisats (Kopolymer von Ethylen und Vinylacetat) fällt der Schmelzpunkt mit steigendem Vinylacetatgehalt, so daß derartige Produkte vor der Sterilisationsbehandlung einer Kreuzvernetzungsbehandlung, die nachstehend beschrieben ist, unterzogen werden müssen.

Die Wasserdampfdurchlässigkeit und die Sauerstoffdurchlässigkeit der vorstehend genannten Polyolefine kann ein Problem bei solchen Lösungen darstellen, die über längere Zeit aufbewahrt werden, so daß es entweder zu einer Anhebung der Konzentration in der Lösung kommen oder aber, sofern Sauerstoff eindringt, zu einer Oxidation der gelösten Bestandteile kommen kann. Letzteres ist insbesondere bei Aminosäurelösungen kritisch und muß daher sicher ausgeschaltet werden.

Zur Behebung dieses Problems kann vorteilhafterweise die Beutelfolie aus dem vorstehend genannten Polyolefin auf ihrer Außenseite mit einer oder mehreren diese Wasserdampfdurchlässigkeit bzw. Sauerstoffdurchlässigkeit senkenden Schicht(en) beschichtet sein, beispielsweise einer Metallfolie oder einem weiteren Polymerisat. Eine solche Beschichtung wird vorteilhafterweise auch aus Sicherheitsgründen eingesetzt, da selbst bei äußerst sorgfältiger Herstellung die Beutelfolie nadelförmige Löcher (pin holes) aufweist, die nicht zu erkennen sind und die Sterilität der eingefüllten Lösung beeinträchtigen können.

Weiterhin kann eine solche Überschichtung auch die mechanische Belastbarkeit eines derartigen Beutels erheblich verbessern, so daß ein solcher Beutel auch bei einem Wurf aus einer Höhe von mehreren Metern nicht zerplatzt.

Vorteilhafterweise wird eine solche Folie eingesetzt, die einen höheren Schmelzpunkt als das der Lösung zugewandte Polymerisat aufweist, also bei der Schmelztemperatur der Innenfolie selbst nicht schmilzt und infolgedessen nicht an einem Siegelwerkzeug anhaftet. Insofern kann eine solche Außenfolie also als Trennmittel bei der Versiegelung der Innenfolie dienen.

Als Polymerisat für die Herstellung eines derartigen Laminats kann jedes der vorstehenden Polyolefine eingesetzt werden. Bevorzugt sind jedoch solche Polymere, die eine niedrige Wasserdampfdurchlässigkeit und eine niedrige Sauerstoffdurchlässigkeit aufweisen. Hierzu gehören Polyamide, PVC, Polyvinylidenchlorid, Polyvinylfluorid, Polytrifluorchlorethylen, Polyethylenterephthalat Polyester u. dgl. Besonders bevorzugt sind Polyamid, Polyvinylidenchlorid, Polyethylenterephthalat und Polyester.

Als Polyamid wird vorteilhafterweise ein Polycaprolactam eingesetzt, das ohne Schädigung mit Heißdampf von 120-140 °C behandelt und sterilisiert werden kann. Vorteilhafterweise enthält dieses Polyamid keine stabilisierenden Zusätze und entspricht somit in seiner Zusammensetzung den Anforderungen zum Einsatz auf dem Lebensmittelsektor.

Die polymeren Außen- und Innenfolien werden vorteilhafterweise mittels eines Kaschierklebers, wie Polyvinylidenchlorid oder eines Polyurethans, zusammengeklebt. Ein derartiger Polyurethan-Kleber kann vorteilhafterweise ein Zweikomponentenklebstoff sein, wobei die erste Komponente aus einem Kaschierkleber und die zweite Komponente aus einem Zusatzlack besteht.

Herstellungstechnisch kann das als Innenfolie eingesetzte Polyolefin in Form einer schlauchartigen Folie extrudiert und anschließend mit einer Kaschierfolie unter Verwendung des vorstehend erwähnten Kaschierklebers, wobei Polyurethan bevorzugt ist, verklebt werden.

Sofern PVC als Außenfolie eingesetzt wird, ist bei der erfindungsgemäßen Polyolefinfolie sichergestellt, daß die im PVC befindlichen Weichmacher nicht durch den Kaschierkleber und die Polyolefinfolie in die im Beutel befindliche Lösung diffundieren.

Bevorzugte Laminate weisen bei einer Temperatur von etwa 23 °C und einer relativen Luftfeuchtigkeit von 85 % in der Regel eine Wasserdampfdurchlässigkeit nach DIN 53 122 von < 1 auf.

Derartige Werte gelten für Standardfolien mit einer Stärke von 50-100, insbesondere etwa 75 μm für die Polyolefinfolie und 20-100, insbesondere 30-70 μm für die polymere Kaschierfolie, wie Polyamid.

Weiterhin ist bei derartigen bevorzugten Laminaten die Sauerstoffdurchlässigkeit gesenkt, wobei dieser Wert unterhalb 15 cm³/m² × Tag × bar Druckdifferenz liegt.

Derartige Folien werden beispielsweise unter der Bezeichnung « Flexovac V 7144 » von der Firma Sengewald, Halle/Westfalen, vertrieben und sind sowohl vom Bundesgesundheitsamt in Berlin als auch von der FDA (Federal Drug Administration) in USA wegen ihrer physiologischen Unbedenklichkeit zur Verwendung im Lebensmittelbereich und im medizinischen Bereich zugelassen worden.

Wie bereits vorstehend erwähnt, weist die der im Beutel befindlichen Flüssigkeit zugewandte Polyolefinfolie keinerlei Weichmacher oder Zusätze auf, die u. U. physiologisch bedenklich sind und vor allen Dingen in die wässrige Lösung diffundieren könnten. Weiterhin ist die ggf. mit einer organischen Kaschierfolie versehene Polyolefinfolie klar und durchsichtig und weist diese Eigenschaften auch nach dem Sterilisieren auf.

Als Material für die Auslaßöffnung wird ein Kopolymerisat eines Olefins mit Vinylacetat eingesetzt. Als Polyolefine, die aus diesem Olefin hergestellt werden, kommen die bereits vorstehend zur Erzeugung des Beutels genannten Olefine in Frage. Derartige Olefine weisen einen Vinylacetatgehalt im Kopolymerisat von 5-40, vorzugsweise 8-35, insbesondere 20-32 Gew.-% auf. Wie bereits vorstehend erläutert, fällt der Schmelzpunkt von Polyethylen mit steigendem Vinylacetatgehalt von etwa 125 °C auf ca. 70 °C ab, wenn ein VAC-Gehalt von 30 Gew.-% vorliegt. Ein derartiger Schlauch schmilzt natürlich bei einer Sterilisationstemperatur oberhalb 100 °C zusammen und ist infolgedessen unbrauchbar. Andererseits steigt die geforderte Rückprall-Elastizität dieser Schläuche mit steigendem VAC-Gehalt von 35 auf 55 % bei 30 %igem VAC-Gehalt an.

Überdies läßt sich ein derartiges schlauchförmiges Material mit einem VAC-Gehalt problemlos mit dem Material des Beutels verschweißen, sofern im wesentlichen ähnliche oder sogar gleiche Polyolefinmaterialien eingesetzt werden. Der Einsatz im wesentlichen gleicher Polyolefinmaterialien für das Anschußstück und den Beutel ist daher bevorzugt. Vorzugsweise wird als Material für die Auslauföffnung ein Kopolymerisat aus Ethylen und Vinylacetat (EVA) mit den vorstehend genannten Gewichtsbereichen eingesetzt, wobei als Beutelmaterial vorteilhafterweise polymerisierte Ethylen- oder Propylenverbindungen in Frage kommen. Besonders bevorzugt ist die Kombination von EVA als Auslauföffnungmaterial und von Polyethylen als Beutelmaterial in den vorstehend angegebenen Gewichtsbereichen.

EVA wird beispielsweise von der HOECHST AG unter der Bezeichnung « Hostalen LD/EVA » und von ICI unter der Bezeichnung « Evatane » und « Alkathene EVA » hergestellt.

Die Herstellung und Verarbeitung der Beutelmaterialien erfolgt nach den in der Kunststofftechnik üblichen Methoden. So können beispielsweise, wie vorstehend erläutert, die Beutel aus einer Extrusion schlauchförmiger Folien, entsprechendem Zuschnitt der Folien und anschließender Randschweißung hergestellt werden. Dieser Beutel, bei dem der für die Anschlußöffnung vorgesehene Rand unverschweißt bleibt, wird anschließend mit einem Schlauchstück oder einem die Auslauföffnung(en) aufweisenden Einsatzstück verschweißt, das mit Hilfe eines Dorns in den geöffneten Beutel eingeführt wird. Hierauf erfolgt die Hitzesiegelung des gesamten noch nicht verschweißten Randes mit dem Schlauchansatzstück oder Einsatzstück. Sofern mehrere Schlauchanschlußstücke vorgesehen sind, führt man natürlich gleichzeitig diesen Verarbeitungsschritt aus, wobei natürlich entsprechende Siegelwerkzeuge benützt werden.

Unter « Schlauchansatzstück » wird also erfindungsgemäß ein Schlauchstück verstanden, das die Strömungsverbindung zwischen dem Innenraum des Beutels und den mit der Öffnung des Schlauchansatzstücks in Verbindung stehenden Infusionsgeräten, Kathetern, Spritzen u. dgl. herstellt. Hierunter wird auch ein Einsatzstück verstanden, das in den Beutel eingeschweißt wird und wenigstens eine entsprechende Auslauföffnung aufweist, ohne daß dieses Einsatzstück in Form eines Schlauches vom Beutelrand hervorsteht. Ein solches Einsatzstück wird ähnlich wie ein Schlauchstück in den noch nicht versiegelten Randbereich des Beutels eingeführt und anschließend mit dem Beutel hitzeverschweißt.

Die so hergestellten Beutel weisen im wesentlichen die gleichen Eigenschaften wie ein PVC-Beutel mit der Ausnahme auf, daß der aus EVA bestehende Anschlußschlauch beim Sterilisieren oberhalb ca. 80 °C zusammenschmilzt und somit eine Hitzesterilisation dieses Beutels nicht möglich ist. Andererseits ist die Schweißnaht, die zwischen dem Beutel und dem Schlauchanschlußstück gebildet ist, so fest, daß nur noch eine gewaltsame Entfernung dieses Stücks möglich ist.

Um das Schlauchanschlußstück sterilisierbar zu machen, muß das aus EVA besthende Schlauchstück kreuzvernetzt werden, wodurch der Schmelzpunkt des Schlauches und dessen Elastizität erheblich ansteigen. Durch diese Kreuzvernetzungsbehandlung ist es daher möglich, daß der so behandelte Fertigbeutel bei Temperaturen bis etwa 120 °C und darüber sterilisiert werden kann. Überdies besitzt der kreuzvernetzte Schlauch erheblich bessere elastische Eigenschaften als ein PVC-Schlauch, der zum Aufziehen auf bestimmte Anschlußstücke üblicherweise erwärmt werden muß.

Es wurde erfindungsgemäß nunmehr festgestellt, daß diese Kreuzvernetzung die vorstehend genannte Schweißnaht nicht aufhebt, was an sich zu vermuten gewesen wäre, da kreuzvernetzte EVA-Schläuche mit dem Polyolefinmaterial allein, beispielsweise mit Polyethylen, nicht verschweißt werden können.

Die Kreuzvernetzung kann nach den an sich bekannten Kreuzvernetzungsbehandlungen von EVA durchgeführt werden. Sie kann beispielsweise durch Bestrahlung mit energiereicher Strahlung, beispielsweise mit beschleunigten Elektronen, α- und β-Strahlen mit einer Energie oberhalb 2,5 Mrad durchgeführt werden. Vorzugsweise wird man in Abhängigkeit von dem eingesetzten Material und dessen Dicke bei Werten von 5-10 Mrad arbeiten.

Diese Behandlung hat den Vorteil, daß der bereits versiegelte und im wesentlichen pyrogenfreie Beutel durch diese hochenergetischen Strahlen sterilisiert wird, so daß hierdurch die Einfüllung einer bereits sterilisierten Lösung möglich ist, also eine Hitzebehandlung im Autoklaven entfallen kann. Weiterhin hat diese Strahlungsbehandlung den Vorteil, daß auch eine etwa im Polyethylen nicht vollständig durchgeführte Polymerisation oder eine mit einem geringen EVA-Anteil hergestellte Beutelfolie hierdurch kreuzvernetzt und in ihrer mechanischen Festigkeit verbessert werden, so daß Sterilisationstemperaturen bis 130 °C erreicht werden.

Ein weiteres Verfahren zur Kreuzvernetzung stellt die Behandlung mit Peroxiden, beispielsweise Cumolperoxid u. dgl. dar, die bei der Wärmebehandlung zerfallen und eine radikalische Kreuzvernetzung starten. In diesem Fall muß natürlich die Herstellung der EVA-Schläuche, die üblicherweise in der Wärme erfolgt, mit der Beutelherstellung kombiniert werden, da ansonsten die EVA-Materialien kreuzvernetzt werden und anschließend nicht mehr mit dem als Beutelmaterial eingesetzter Polyethylen verschweißt werden können.

Ein weiteres, ebenfalls auf der Zugabe und Zersetzung von chemischen Verbindungen bestehendes Kreuzvernetzungsverfahren besteht im Einsatz von siliciumorganischen Verbindungen, die sich beim Zersetzen in einer feuchtheißen Atmosphäre mit dem EVA kreuzvernetzen, wobei Si-Brücken gebildet werden. Ein Beispiel für diese Si-Kreuzvernetzung stellt das sogen. « Sioplas-Verfahren » von ICI dar, bei dem die silicimorganischen Verbindungen in das EVA-Granulat eingearbeitet und das erhaltene Produkt zu den gewünschten Folien oder Schläuchen extrudiert werden. Auch hier erfolgt die Kreuzvernetzung innerhalb von Stunden bis Tagen, in Abhängigkeit von dem gewählten Feuchtigkeitsgrad und der Temperatur. So kann die Kreuzvernetzung innerhalb von etwa 1 Stunde durchgeführt sein, wenn sie bei Temperaturen oberhalb 80° und einer relativen Luftfeuchtigkeit von 100 % durchgeführt wird.

Auch dieses Verfahren bedingt natürlich eine gemeinsame Durchführung der Herstellung der Folien- und Schlauchprodukte und deren Weiterverarbeitung zu dem erfindungsgemäßen Beutel.

Von diesen vorstehend genannten Kreuzvernetzungsverfahren sind das Bestrahlen mit energiereicher Strahlung und das Behandeln mit siliciumorganischen Kreuzvernetzungsverbindungen bevorzugt.

Hervorzuheben ist jedoch, daß jedes Kreuzvernetzungsverfahren eingesetzt werden kann, mit dem ein noch nicht kreuzvernetzter und bereits mit dem Beutelmaterial verschweißter Polyolefinschlauch mit einem bestimmten VAC-Gehalt nach der Einschweißung kreuzvernetzt werden kann.

Es zeigen

Fig. 1 einen Beutel für Infusionszwecke schematisch in der Draufsicht,

Fig. 2 einen Schnitt durch den Beutel gem. Fig. 1 entlang der Linie II-II,

Fig. 3 den Öffnungsbereich eines schlauchförmigen Ansatzstücks aus EVA,

Fig. 4 einen Ausschnitt aus einer Draufsicht auf eine weitere Ausführungsform eines Einsatzstücks mit schlauchförmigen Ansatzstücken ohne Abreißdeckel,

Fig. 5 einen Schnitt durch die Ausführungsform gem. Fig. 4 entlang der Linie V-V,

Fig. 6 eine weitere Ausführungsform in der Draufsicht, die der Ausführungsform gem. Fig. 4 ähnelt und

Fig. 7 einen Ausschnitt einer Schnittansicht einer Ausführungsform, die die Umhüllung eines Schlauchansatzstücks zeigt.

Der Beutel 10 besteht im wesentlichen aus der Kammer 12, die allseits von einem Schweißrand 14 umschlossen ist, wobei dieser Beutel 10 zwei Auslauföffnungen 16 und 18 aufweist, die jeweils mit einem Schlauchansatzstück 20 und 22 als Auslauftüllen in Verbindung stehen. Über diese Schlauchansatzstücke 20 und 22 kann die aufzubewahrende Flüssigkeit, beispielsweise eine Infusionslösung oder Blut, in die Kammer 12 des Beutels 10 eingeleitet werden, wobei das eine oder beide Ansatzstücke als Einlaufstutzen verwendet werden können.

Ein solcher Beutel 10 wird üblicherweise dadurch hergestellt, daß zunächst die zur Beutelherstellung benötigten Folien aufeinandergelegt werden und anschließend der Schweißrand 14 gebildet wird, wobei die Auslauföffnungen 16 und 18 beim Verschweißen ausgespart werden. Anschließend werden die Schlauchansatzstücke 20 und 22 in die Auslaßöffnungen 16 und 18 mit Hilfe eines nichtgezeigten Dorns eingeführt und danach mit den Beutelfolien entlang ihres Außenumfangs verschweißt. Wie vorstehend festgestellt, wird vorzugsweise Polyethylen als Beutelmaterial mit dem vorzugsweise eingesetzten EVA als Schlauchmaterial verschweißt und anschließend eine Vernetzung von EVA vorzugsweise mit Hilfe von ionisierten Strahlen durchgeführt.

Für Infusionszwecke wird das Schlauchansatzstück 20 mit einem Hohlstopfen 23 für Infusionszwecke verbunden, dessen stirnseitiges Ende mit einer durchstechbaren, sterilen Membran 24 aus dem üblicherweise verwendeten Chlorbutylkautschuk verschlossen ist. Diese Membran 24, die nach üblichen Techniken mit dem üblicherweise aus Polycarbonat bestehenden Stopfen 23 verbunden ist, ist aus hygienischen Zwecken mit einer Kappe 25 abgedeckt.

Das andere Schlauchansatzstück 22 kann mit einem Zuspritzstopfen 26 verbunden sein, der vorteilhafterweise ebenfalls aus Polycarbonat besteht und einen durchstechbaren Einsatz 27, beispielsweise aus Latex, aufweist.

Sobald diese Stopfen 23 und 26 in die kreuzvernetzten EVA-Schlauchansatzstücke 20 und 22 unter Erweiterung dieser Stücke eingesteckt worden sind, können sie nur noch mit größter Kraftaufwendung herausgezogen werden, weisen also einen sicheren Sitz auf.

Da der Beutel 10 üblicherweise mit den Schlauchansatzstücken 20, 22 nach unten aufgehängt wird, damit die eingefüllte Lösung ohne Schwierigkeiten ausströmen kann, weist der diesen Schlauchansatzstücken 20, 22 gegenüberliegende Rand 14 eine Öffnung 28 auf, in die ein hakenförmiges Halteteil eines Stativs oder dgl. zur Befestigung und Lagerung des Beutels 10 eingeführt werden kann.

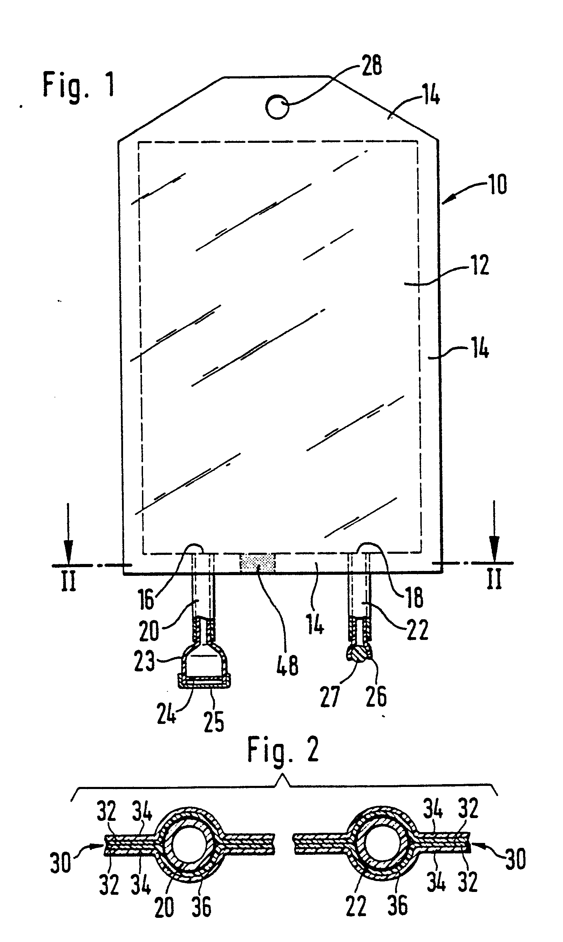

Gemäß der bevorzugten Ausführungsform, die in vergrößerter Darstellung in Fig. 2 gezeigt ist, besteht das Beutelmaterial aus einem Laminat 30, das folienförmig ausgebildet ist. Dieses Laminat 30 weist gemäß der besonders bevorzugten Ausführungsform auf der der Lösung zugewandten Seite eine Polyethylenfolie 32 auf, die üblicherweise eine Dicke von 30-100, vorzugsweise 75 μm besitzt. Das eingesetzte Polyethylen ist vorzugsweise ein Material mit einer Dichte von 0,935 g/cm³, einem Schmelzbereich von etwa 121-124 °C und einer Vicat-Erweichungstemperatur von etwa 118 °C.

Auf diese Polyethylenfolie 32 ist eine Polyamidfolie 34 mittels eines Polyurethanklebers aufgeklebt, die üblicherweise eine Dicke von etwa 30-70 μm besitzt.

Aus der Fig. 2 ist weiterhin ersichtlich, daß die Polyethylenfolie 32 im Übergangsbereich zu den Schlauchansatzstücken 20 und 22 eine Schweißnaht 36 aufweist, die eine innige Verbindung zwischen der Folie und dem Ansatzstück 20, 22 herstellt, so daß ein Herausreißen dieser Ansatzstücke 20, 22 aus dem Beutel 10 nur unter Zerstörung des gesamten Beutels möglich ist.

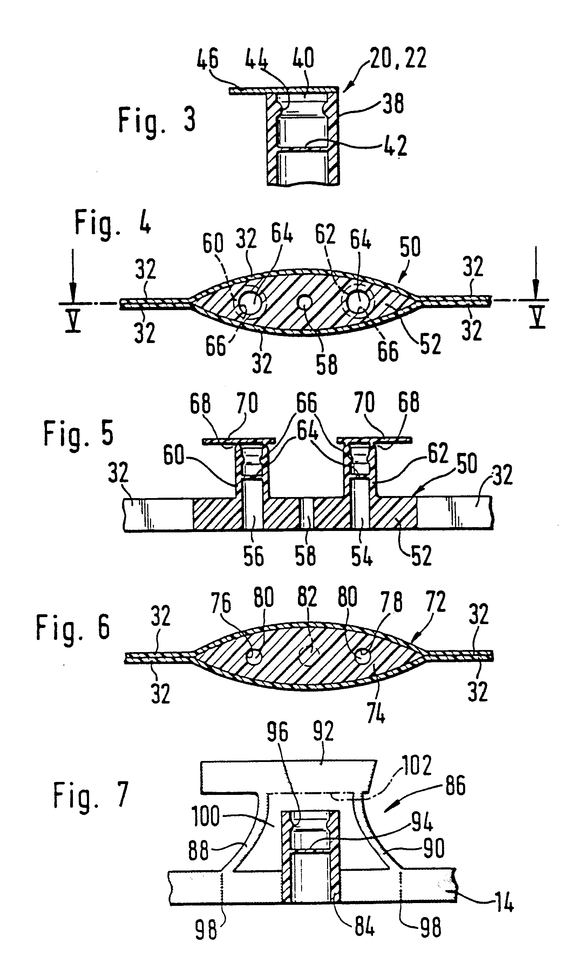

In Fig. 3 ist eine weitere Ausführungsform der Schlauchansatzstücke 20 und 22 dargestellt, wobei die in Fig. 3 gezeigte Abbildung lediglich den Endbereich dieser Ansatzstücke, also nicht den Schweißbereich mit dem Beutelmaterial zeigt. Der Endbereich 38 der Schlauchansatzstücke 20, 22 weist in der Nähe des Einführungsendes 40 eine sich quer über dieses Einführungsende 40 erstreckende Membran 42 auf, die das Beutelinnere hermetisch vom Umwelteinflüssen abschließt. Diese Membran 42 wird beim Einsatz mit der Spitze eines nichtgezeigten Infusionsgerätes aufgestochen, so daß durch dieses die im Beutel 10 enthaltene Flüssigkeit abfließen kann. Da der Beutel 10, wie vorstehend erläutert, üblicherweise kopfüber aufgehängt ist, also bei nach unten weisenden Schlauchansatzstücken 20, 22 die im Beutel befindliche Flüssigkeit ablaufen kann, sofern nicht eine wirksame Dichtung zwischen der Spitze des Infusionsgerätes und der Schlauchwand gegeben ist, weist diese Schlauchwand im Bereich der Einführöffnung 40 vorteilhafterweise einen ringförmig umlaufenden Wulst 44 auf, der sich dicht an diese Spitze vor dem Durchstechen der Membran 42 anlegen kann.

Derart mit einer Membran 42 versehene Schlauchansatzstücke 20, 22 werden natürlich vor dem Verschweißen mit dem Beutel 10 nach einem üblichen Spritzgußverfahren hergestellt und mit Hilfe eines speziell ausgebildeten Dorns, der die Membran 42 nicht durchstechen kann, in die Auslauföffnungen 16 und 18 eingeführt.

Da die Membran 42 selbst nach dem Sterilisieren im Autoklaven steril bleiben soll, ist die Einführöffnung 40 mit einem peelfähigen Verschlußstreifen 46 abgedeckt, der bei Bedarf abgezogen werden kann.

Die gem. Fig. 3 gezeigte Ausführungsform muß natürlich eine spezielle Einführöffnung 48 im Rand des Beutels 10 aufweisen, die in Fig. 1 schraffiert gezeigt ist und die ebenfalls wie die Auslaßöffnungen 16 und 18 von der Verschweißung bei der Herstellung des Beutels ausgespart ist. Diese Öffnung 48 erlaubt die Füllung des Beutels und wird nach dem Füllen in der üblichen Weise verschweißt oder versiegelt.

Eine weitere Ausführungsform ist in Fig. 4 und 5 gezeigt. Dabei wird ein Einsatzstück 50 vorgesehen, das im wesentlichen aus einem Einsatzkörper 52 besteht, der — wie in Fig. 4 gezeigt — eine linsenförmige Struktur aufweisen kann. Diese Struktur erleichtert und den Kanten die Verschweißung mit der Innenfolie 32, so daß ein nahezu stufenloser Übergang zwischen dem Verschweißungsrand 14 und dem Einsatzkörper 52 gewährleistet wird.

Dieser Einsatzkörper 52 ist gemäß der in Fig. 4 und 5 gezeigten Ausführungsform mit Ein- und Auslaßöffnungen 54 und 56 durchsetzt. Weiterhin weist er eine Füllöffnung 58 unter der nachstehend erwähnten Maßgabe auf.

Die Ein- und Auslauföffnung 54 und 56 ist jeweils mit einem schlauchförmigen Ansatzstück 60 und 62 in Verbindung, wobei die Stücke 60 und 62 gem. den in Fig. 1 oder 3 gezeigten Ausführungsformen ausgebildet sein können. So können sie wiederum Membranen 64 und Ringwülste 66 aufweisen, wobei diese Anordnung dann die Füllöffnung 58 notwendig macht, die mit einem entsprechend angepaßten Stopfen nach dem Füllen sicher verschlossen werden kann.

Gemäß der in Fig. 5 gezeigten Ausführungsform sind die Ränder der Ansatzstücke 60 und 62 über Schwächungslinien 68 mit jeweils einem Abreißdeckel 70 verbunden, der einerseits die Membran 64 bis zum Gebrauch steril hält und andererseits vor dem Gebrauch einfach abgerissen werden kann.

Natürlich kann auch die in Fig. 4 und 5 gezeigte Ausführungsform ohne Membranen 64 und Wülste 66 sowie Abreißdeckel 70 vorgesehen sein, wodurch sich die Füllöffnung 58 erübrigen kann. Weiterhin kann natürlich auch ein schlauchförmiges Ansatzstück 60 oder 62 oder mehrere davon vorgesehen sein.

In Fig. 6 ist eine weitere Ausführungsform eines solchen Einsatzstücks 72 gezeigt, das im wesentlichen aus einem ebenfalls vorzugsweise linsenförmigen Einsatzkörper 74 besteht, der im wesentlichen der Form des Einsatzkörpers 52 entspricht. Die Dicke dieser Einsatzkörper 52 und 74 ist dabei so bemessen, daß sie hinsichtlich ihrer Dicke mit dem Schweißrand 14 zusammenfallen und somit überstehende Bereiche bei diesem Körpern 52 und 74 vermieden werden.

Bei dem in Fig. 6 ersichtlichen Einsatzkörper 74 entfallen somit die aus Fig. 5 ersichtlichen schlauchförmigen Ansatzstücke 60 und 62, so daß dieser Körper 74 lediglich mit Ein- oder Auslauföffnungen 76 oder 78 durchsetzt ist. In diese Ein- oder Auslauföffnungen 76 oder 78 können die gem. Fig. 1 gezeigten Stopfen 23 oder 26 vorteilhafterweise eingesetzt werden. Andererseits können natürlich die Einlaß- oder Auslaßöffnungen 76 und 78 gemäß der in Fig. 3 gezeigten Ausführungsform verschlossen sein, also eine Membran 80 vorgesehen sein, die vorzugsweise an der Unterfläche des Einsatzkörpers 74 angeordnet ist. In einem solchen Fall ist wiederum eine Füllöffnung 82 vorgesehen, die in Fig. 6 gestrichelt gezeigt ist. Diese Füllöffnung 82 kann wiederum mit einem entsprechend angepaßten Stopfen verschlossen werden. Die Einlaß- und Auslaßöffnungen 76 und 78 können, sofern eine Membran 80 vorgesehen ist, mit einer peelfähigen, nicht gezeigten Folie steril abgedeckt werden, die die Oberfläche des Einsatzkörpers 74 abdeckt.

In Fig. 7 ist die Schnittansicht einer weiteren Ausführungsform gezeigt, die im wesentlichen der Ausführungsform gemäß Fig. 1 entspricht und nur ein schlauchförmiges Ansatzstück 84 gezeigt ist, das in den Beutel 10 im Bereich des Randes 14 eingeschweißt ist.

Der Zuschnitt der in Fig. 7 gezeigten Ausführungsform des Beutels 10 entspricht im wesentlichen dem Zuschnitt des in Fig. 1 gezeigten Beutels, mit der Maßgabe, daß im Bereich der Ansatzstücke 84 jeweils die beiden den Beutel 10 bildenden Folien lappenartige, überstehende Bereiche 86 aufweisen, die bei entsprechender Verschweißung ihrer Ränder 88, 90 und 92 das schlauchförmige Ansatzstück 84 vollständig und dicht umhüllen können. Somit ist das schlauchförmige Ansatzstück 84, das gemäß dieser Ausführungsform wiederum mit einer Membran 94 verschlossen ist und einen entsprechenden Wulst 96 aufweist, was bei den vorstehenden Ausführungsformen erläutert ist, nach dem Verschweißen dieses Bereichs steril nach außen abgedichtet.

Dabei wird der Rand 14 bei der Beutelherstellung zunächst nur bis zu dem Bereich 98 zugeschweißt, so daß also der Bereich 86 der durch zwei lappenartige Foliengebilde erzeugt wird, geöffnet bleibt. Anschließend wird in diesen geöffneten Bereich 86 das Ansatzstück 84 eingeführt, wobei die Umschweißung dieses Ansatzstücks 84 im Bereich des Schweißrandes 14 erfolgt, also dieser Schweißrand 14 vollständig entlang des Beutelumfangs geschlossen wird. Der immer noch in seinen Rändern 88, 90 und 92 offene Bereich wird dann anschließend entlang der Ränder 88, 90 und 92, wie dies in Fig. 7 dargestellt ist, zugeschweißt, wobei der Innenraum 100 dieses Bereichs 86 unverschweißt bleibt.

Vorteilhafterweise ist am Übergang zwischen dem Innenraum 100 und dem Rand 92 eine Schwächungslinie 102 vorgesehen, die bei entsprechender Beanspruchung des Randes 92, der vorteilhafterweise als Grifflasche ausgeführt ist, aufgerissen werden kann, wobei der Rand 92 vollständig entfernt werden kann.

Natürlich können auch mehrere Ansatzstücke 84 von einem Bereich 86 umgeben sein oder aber auch mehrere Bereiche 86 können jeweils ein Ansatzstück 84 umgeben. Beispielsweise kann die in Fig. 1 gezeigte Ausführungsform mit zwei Ansatzstücken zwei Bereiche 86 getrennt voneinander aufweisen und eine Füllöffnung 48 vorgesehen sein, die nicht von diesen Bereichen erfaßt wird. Andererseits können sämtliche drei Öffnungen zum Beutel hin von einem Bereich vollständig umgeben sein, wobei diese Einschweißungsart nicht davon abhängig ist, ob die Ansatzstücke von einer Membran oder von ggf. hohlen Stopfen verschlossen sind.

Als Material für die Schlauchansatzstücke 20, 22 und die Einsatzstücke 50, 72 sowie das Ansatzstück 84 wird EVA gewählt mit einem VAC-Anteil von vorzugsweise 25-35 Gew.-%, wobei auf die vorstehend genannten Produkte « Hostalen », « Evatane » oder « Alkathene » zurückgegriffen wird.

Nach der Kreuzvernetzung durch beispielsweise Bestrahlen mit β-Strahlen oder durch Behandlung nach dem Sioplas-Verfahren wird ein kreuzvernetztes Schlauchansatzstück oder Einsatzstück erhalten, das auch bei Temperaturen bis wenigstens 120 °C hitzesterilisierbar ist. Dabei wird auch die Schweißnaht 36 nicht aufgehoben, die durch eine vor der Vernetzungsbehandlung liegende Schweißbehandlung hergestellt worden ist.

**Patentansprüche**

1. Aufbewahrungsbeutel, insbesondere für medizinische Zwecke zur Lagerung von Blut oder Infusionslösungen, aus Polyolefin und mit wenigstens einer schlauchförmigen Auslauföffnung, gekennzeichnet durch einen Beutel (10), der wenigstens ein Schlauchansatzstück (20, 22, 84) oder Einsatzstück (50, 72) aus einem kreuzvernetzten Kopolymerisat von Olefin und Vinylacetat aufweist.

2. Beutel nach Anspruch 1, dadurch gekennzeichnet, daß das Polyolefin Polyethylen, Polypropylen, Poly-n-butylen, Polyisobutylen, Poly-4-methylpenten-1, chlorsulfoniertes Polyethylen, Polystyrol, halogenierte Polyethylene oder Polymethymetacrylat sowie deren Kopolymerisate oder Mischpolymerisate ist.

3. Beutel nach Anspruch 2, dadurch gekennzeichnet, daß das Polyolefin Polyethylen mit einer Dichte von 0,91-0,94 g/cm³ ist.

4. Beutel nach Anspruch 3, dadurch gekennzeichnet, daß der Schmelzbereich des Polyethylens oberhalb 116 °C liegt.

5. Beutel nach Anspruch 4, dadurch gekennzeichnet, daß das Polyethylen folienförmig vorliegt und mit einer Folie aus Polyamid, Polyvinylidenchlorid, Polyethylenterephthalat und Polyester kaschiert ist.

6. Beutel nach Anspruch 5, dadurch gekennzeichnet, daß das aus Polyethylenfolie und kaschierfolie bestehende Laminat bis zu 0,2 mm stark ist, wobei die Polyethylenfolie eine Stärke von 50-100 µm und die Kaschierfolie eine Stärke von 20-100 µm aufweist.

7. Beutel nach Anspruch 1, dadurch gekennzeichnet, daß das Schlauchansatzstück (20, 22) oder Einsatzstück (50, 72) aus einem Kopolymerisat vom 95-60 Gew.-% Olefin und 5-40 Gew.-% Vinylacetat besteht.

8. Beutel nach Anspruch 7, dadurch gekennzeichnet, daß das Kopolymerisat einen Olefingehalt von 80-68 Gew.-% und einen Vinylacetatgehalt von 20-32 Gew.-% aufweist.

9. Beutel nach Anspruch 7, dadurch gekennzeichnet, daß das Olefin eines der Olefine ist, das zu den Polyolefinen gem. Anspruch 2 führt.

10. Beutel nach Anspruch 9, dadurch gekennzeichnet, daß das Olefin Ethylen ist.

11. Beutel nach Anspruch 1, dadurch gekennzeichnet, daß das Kopolymerisat des Ansatzstücks (20, 22, 84) oder des Einsatzstücks (50, 72) mit dem Polyolefin des Beutels (10) verschweißt und anschließend kreuzvernetzt worden ist.

12. Beutel nach Anspruch 11, dadurch gekennzeichnet, daß die Kreuzvernetzung mit energiereicher Strahlung durchgeführt worden ist.

13. Beutel nach Anspruch 1, dadurch gekennzeichnet, daß die Schlauchansatzstücke (20, 22, 84, 60, 62) oder die im Einsatz (50) vorgesehenen Einlaß- oder Auslaßöffnungen (76, 78) mit Infusionsstopfen (23) oder Zuspritzstopfen (26) verbindbar sind.

14. Beutel nach Anspruch 1, dadurch gekennzeichnet, daß die Anschlußstücke (20, 22, 60, 62, 84) oder die Öffnungen (74, 76) mit einer durchstechbaren Membran (42, 64, 80, 94) verschlossen sind.

15. Beutel nach Anspruch 14, dadurch gekennzeichnet, daß am Beutel (10) eine zuschweißbare Füllöffnung (48) oder im Einsatzstück (50, 72) eine Füllöffnung (58, 82) vorgesehen ist, die mit einem Stopfen verschließbar ist.

16. Beutel nach Anspruch 14, dadurch gekennzeichnet, daß sich an die Membran (42, 64, 80, 92) eine Verengung (44, 66, 96) der Öffnung (40) anschließt.

17. Beutel nach Anspruch 1, dadurch gekennzeichnet, daß die Anschlußstücke (20, 22, 84) oder die Einsatzstücke (50, 72) mit einem entfernbaren Verschluß (46, 70) versehen sind.

18. Beutel nach Anspruch 1, dadurch gekennzeichnet, daß die Anschlußstücke (20, 22, 84) oder die Einsatzstücke (50, 72) von einem oder mehreren Folienbereichen (86) umschweißt sind.

**Claims**

1. A storage bag, in particular for medical purposes, for storing blood or infusion solutions, made from polyolefin and comprising at least one hose-like outlet opening, characterized by a bag (10) comprising at least one hose connector piece (20, 22, 84) or a male part (50, 72) from a crosslinked copolymer of olefin and vinylacetate.

2. The bag according to claim 1, characterized in that the polyolefin is polyethylene, polypropylene, poly-n-butylene, polyisobutylene, poly-4-methylpentene-1, chlorosulfated polyethylene, polystyrene, halogenated polyethylene or polymethymetacrylate as well as their copolymers or interpolymers.

3. The bag according to claim 2, characterized in that the polyolefin is polyethylene with a density of 0.91-0.94 g/cm³.

4. The bag according to claim 3, characterized in that the melting range of the polyethylene is above 116 °C.

5. The bag according to claim 4, characterized in that the polyethylene is present in the form of a film and is laminated with a film from polyamide, polyvinylidenchloride, polyethylene terephthalate and polyester.

6. The bag according to claim 5, characterized in that the laminate consisting of polyethylene film and laminating film has a thickness of up to 0.2 mm, whereby the polyethylene film has a thickness of from 50-100 µ and the laminating film a thickness of from 20-100 µ.

7. The bag according to claim 1, characterized in that the hose connector piece (20, 22) or male part (50, 72) consists from a copolymer from 95-60 % by weight olefin and 5-40 % by weight vinylacetate.

8. The bag according to claim 7, characterized in that the copolymer comprises an olefin content of from 80-68 % by weight and a vinylacetate content of from 20-32 % by weight.

9. The bag according to claim 7, characterized in that the olefin is one of those olefins which leads to the polyolefins acc. to claim 2.

10. The bag according to claim 9, characterized in that the olefin is ethylene.

11. The bag according to claim 1, characterized in that the copolymerisate of the connector piece (20, 22, 84) or the male part (50, 72) is welded to the polyolefin of the bag (10) and subsequently cross-linked.

12. The bag according to claim 11, characterized in that the cross-linking has been effected with high energy radiation.

13. The bag according to claim 1, characterized in that the hose connector pieces (20, 22, 84, 60, 62) or the inlet- or outlet openings (76, 78) provided in the plug piece are connectable with infusion stoppers (23) or syringe stoppers (26).

14. The bag according to claim 1, characterized in that the connector pieces (20, 22, 60, 62, 84) or the openings (74, 76) are closed with a pierceable diaphragm (42, 64, 80, 94).

15. The bag according to claim 14, characterized in that at the bag (10) a weldable filling opening (48) or within the male part (50, 72) a filling opening (58, 82) is provided which may be shut off with a stopper.

16. The bag according to claim 14, characterized in that the diaphragm (42, 64, 80, 92) is followed by a narrowing (44, 66, 96) of the opening (40).

17. The bag according to claim 1, characterized in that the connector pieces (20, 22, 84) or the male parts (50, 72) are provided with a removable closure (46, 70).

18. The bag according to claim 1, characterized in that the connector pieces (20, 22, 84) or the male parts (50, 72) are welded around by one or several foil areas (86).

## Revendications

1. Poche de conservation, en particulier à des fins médicales pour la conservation du sang ou de solutions pour perfusion, faite de polyoléfine et comprenant au moins un orifice de sortie en forme de tuyau souple, caractérisée par une poche (10) qui comprend au moins un élément de raccordement en tuyau souple (20, 22, 84) ou élément d'insertion (50, 72) fait d'un copolymère réticulé d'oléfine et d'acétate de vinyle.

2. Poche suivant la revendication 1, caractérisée en ce que la polyoléfine est le polyéthylène, le polypropylène, le poly-n-butylène, le polyisobutylène, le poly-4-méthylpentène-1, le polyéthylène chlorosulfoné, le polystyrène, un polyéthylène halogéné ou le poly(méthacrylate de méthyle) ou bien un de leurs copolymères ou polymères mixtes.

3. Poche suivant la revendication 2, caractérisée en ce que la polyoléfine est le polyéthylène d'une masse volumique de 0,91-0,94 g/cm$^3$.

4. Poche suivant la revendication 3, caractérisée en ce que l'intervalle de fusion du polyéthylène est situé au-delà de 116 °C.

5. Poche suivant la revendication 4, caractérisée en ce que le polyéthylène se présente en forme de feuille et est doublé d'une feuille de polyamide, de poly(chlorure de vinylidène), de poly(téréphtalate d'éthylène) ou de polyester.

6. Poche suivant la revendication 5, caractérisée en ce que le stratifié consistant en la feuille de polyéthylène et en la feuille à doubler a une épaisseur jusqu'à 0,2 mm, la feuille de polyéthylène ayant une épaisseur de 50-100 μm et la feuille à doubler ayant une épaisseur de 20-100 μm.

7. Poche suivant la revendication 1, caractérisée en ce que l'élément de raccordement en tuyau souple (20, 22) ou l'élément d'insertion (50, 72) consiste en un copolymère de 95-60 % en poids d'oléfine et de 5-40 % en poids d'acétate de vinyle.

8. Poche suivant la revendication 7, caractérisée en ce que le copolymère a une teneur en oléfine de 80-68 % en poids et une teneur en acétate de vinyle de 20-32 % en poids.

9. Poche suivant la revendication 7, caractérisée en ce que l'oléfine est une oléfine conduisant aux polyoléfines suivant la revendication 2.

10. Poche suivant la revendication 9, caractérisée en ce que l'oléfine est l'éthylène.

11. Poche suivant la revendication 1, caractérisée en ce que le copolymère de l'élément de raccordement (20, 22, 84) ou de l'élément d'insertion (50, 72) a été soudé avec la polyoléfine de la poche (10) et ensuite réticulé.

12. Poche suivant la revendication 11, caractérisée en ce que la réticulation a été exécutée au moyen d'un rayonnement de haute énergie.

13. Poche suivant la revendication 1, caractérisée en ce que les éléments de raccordement en tuyau souple (20, 22, 84, 60, 62) ou les orifices d'entrée ou de sortie (76, 78) prévus dans l'élément d'insertion (50) peuvent être associés avec des bouchons pour perfusion (23) ou des bouchons pour injection (26).

14. Poche suivant la revendication 1, caractérisée en ce que les éléments de raccordement (20, 22, 60, 62, 84) ou les orifices (74, 76) sont obturés au moyen d'une membrane à percer (42, 64, 80, 94).

15. Poche suivant la revendication 14, caractérisée en ce qu'il est prévu dans la poche (10), un orifice de remplissage (48) qui peut être fermé par soudure, ou dans l'élément d'insertion (50, 72), un orifice de remplissage (58, 82) qui peut être obturé au moyen d'un bouchon.

16. Poche suivant la revendication 14, caractérisée en ce qu'un étranglement (44, 66, 96) de l'orifice (40) succède à la membrane (42, 64, 80, 92).

17. Poche suivant la revendication 1, caractérisée en ce que les éléments de raccordement (20, 22, 84) ou les éléments d'insertion (50, 72) sont munis d'un obturateur amovible (46, 70).

18. Poche suivant la revendication 1, caractérisée en ce que les éléments de raccordement (20, 22, 84) ou les éléments d'insertion (50, 72) sont entourés par une ou plusieurs régions de feuille (86) soudées.

Fig. 1

Fig. 2

Fig. 3

Fig. 4

Fig. 5

Fig. 6

Fig. 7